# EUROPEAN PATENT APPLICATION

(11) **EP 2 793 146 A1**
(43) Date of publication of application: **22.10.2014**
(21) Application number: 14164785.9
(22) Date of filing: 15.04.2014
(51) Int. Cl.: G06F 17/30

(54) **Relevance-based cutoff for search results**

(30) Priority: 16.04.2013 US 201313864046
(71) Applicant: Wal-Mart Stores, Inc., Bentonville, AR 72716 (US)
(72) Inventor: Taank, Sumit, Bentonville, AR 72716 (US)
(74) Representative: Brandon, Paul Laurence

(57) **Abstract**

A computer-implemented method is disclosed for cutting off listings or search results. In the method, a computer system receives a query from a client computer. In response to the query, the computer system compiles listings ranked according to corresponding relevance scores. Thereafter, the computer system calculates a cutoff score that is less than a maximum relevance score corresponding to the listings. For example, the computer system may calculate a cutoff score by multiplying a maximum relevance score corresponding to the listings by a weighting. In selected embodiments, the weighting may be greater than 0.05 and less than 0.5. The computer system then serves to the client computer as a response to the query a subset of the listings. The subset comprises those listings corresponding to a relevance score greater than the cutoff score.

## Description

### BACKGROUND

### FIELD OF THE INVENTION

This invention relates to computer-based search systems and more particularly to systems and methods for cutting off listings or results to be returned in response to a request or query.

### BACKGROUND OF THE INVENTION

Typical search engines return all results matching the terms of the corresponding query. As a result, many of the results returned are irrelevant. Such irrelevant results can limit the usefulness of the search. Additionally, they can adversely impact certain search features like faceting and sorting. Accordingly, what is needed is a computer system configured to cut off or limit the results delivered in response to a query.

### SUMMARY OF THE INVENTION

According to the present invention in a first aspect, there is provided a computer-implemented method for cutting off search results, the method comprising obtaining, by a computer system, a plurality of listings and a plurality of relevance scores; obtaining, by the computer system, information linking each listing of the plurality of listings to a corresponding relevance score of the plurality of relevance scores; calculating, by the computer system, a first cutoff score that is less than a maximum relevance score of the plurality of relevance scores and greater than a minimum relevance score of the plurality of relevance scores; and serving, by the computer system to a client computer, a first subset of the plurality of listings, the first subset comprising those listings of the plurality of listings linked to a corresponding relevance score greater than the first cutoff score.

According to the present invention in a second aspect, there is provided a computer implemented method for cutting off search results, the method comprising receiving, by a computer system from a client computer, a query; obtaining, by the computer system as a response to the query, a plurality of listings ranked according to a plurality of relevance scores, each listing of the plurality of listings corresponding to a relevance score of the plurality of relevance scores; calculating, by the computer system, a first cutoff score by multiplying a maximum relevance score of the plurality of relevance scores by a first weighting, the first weighting being greater than zero and less than one; and serving, by the computer system to the client computer, a first subset of the plurality of listings, the first subset comprising those listings of the plurality of listings linked to a corresponding relevance score greater than the first cutoff score.

Suitably, the first weighting is between about 0.05 and about 0.5.

Suitably, the method further comprises determining, by the computer system before the serving, that a number of listings contained within the first subset is too high.

Suitably, the method further comprises calculating, by the computer system after the determining, a second cutoff score by multiplying the maximum relevance score of the plurality of relevance scores by a second weighting, the second weighting being greater than the first weighting.

Suitably, the method further comprises determining, by the computer system before the serving, that a number of listings contained within the first subset is too low.

Suitably, the method further comprises calculating, by the computer system after the determining, a second cutoff score by multiplying the maximum relevance score of the plurality of relevance scores by a second weighting, the second weighting being less than the first weighting.

According to the present invention in a third aspect, there is provided a computer system comprising one or more processors; one or more memory devices operably connected to the one or more processors; and the one or more memory devices collectively storing a search module programmed to receive a query and compile, as a response to the query, a plurality of listings ranked according to a plurality of relevance scores, each listing of the plurality of listings corresponding to a relevance score of the plurality of relevance scores, a cutoff module programmed to calculate a cutoff score by multiplying a maximum relevance score of the plurality of relevance scores by a first weighting, the first weighting being greater than zero and less than one, and the search or cutoff module further programmed to return, as a response to the request, a subset of the plurality of listings, the subset comprising those listings of the plurality of listings linked to a corresponding relevance score greater than the first cutoff score.

Further features of the present invention are set out in the appended claims.

### BRIEF DESCRIPTION OF THE DRAWINGS

In order that the advantages of the invention will be readily understood, a more particular description of the invention briefly described above will be rendered by reference to specific embodiments illustrated in the appended drawings. Understanding that these drawings depict only typical embodiments of the invention and are not therefore to be considered limiting of its scope, the invention will be described and explained with additional specificity and detail through use of the accompanying drawings, in which:
Figure 1 is a schematic block diagram of one embodiment of a computer system in accordance with the present invention;
Figure 2 is a schematic block diagram of one embodiment of communication that may occur between different nodes of a computer system in accordance with the present invention;
Figure 3 is a schematic block diagram of one embodiment of a method that may be executed by a computer system in accordance with the present invention;
Figure 4 is a schematic block diagram of one embodiment of a server or server system in accordance with the present invention;
Figure 5 is a schematic block diagram of one embodiment of a cutoff module in accordance with the present invention;
Figure 6 is an illustration of one embodiment of an algorithm for calculating cutoff scores in accordance with the present invention; and
Figure 7 is a table illustrating various relevance-based cutoffs that may be produced by a computer system in accordance with the present invention.

### DETAILED DESCRIPTION

It will be readily understood that the components of the present invention, as generally described and illustrated in the Figures herein, could be arranged and designed in a wide variety of different configurations. Thus, the following more detailed description of the embodiments of the invention, as represented in the Figures, is not intended to limit the scope of the invention, as claimed, but is merely representative of certain examples of presently contemplated embodiments in accordance with the invention. The presently described embodiments will be best understood by reference to the drawings, wherein like parts are designated by like numerals throughout.

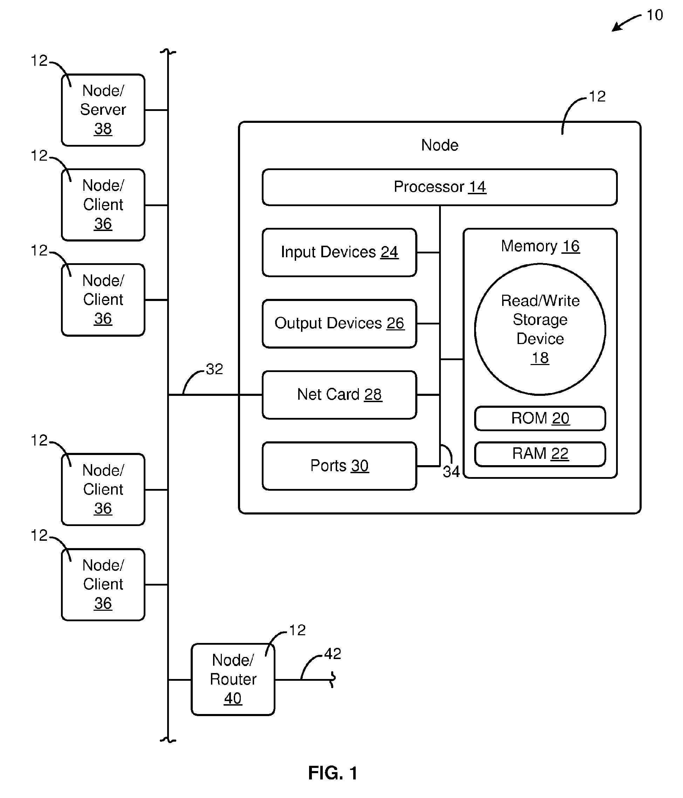

Referring to Figure 1, a system 10 in accordance with the present invention may assist a human user in accessing information. For example, a human user may enter a query or request for information into a system 10. The system 10 may respond by identifying a relatively large number of matching results. However, as with most search systems, many of the matching results may be irrelevant to a corresponding user.

In e-commerce applications, returning irrelevant results may lower the quality of a user's experience. For example, returning irrelevant results may obscure the relevant results. That is, a user may be required to wade through a certain number of irrelevant results before finding the relevant results. Additionally, returning irrelevant results may adversely impact selected functions like faceting and sorting.

Faceting may be defined as refining or filtering search results based on some attribute such as brand, color, size, price, rating, or the like. For example, via a faceting command, a user may filter search results and isolate or see those results that cost less than $200, correspond to a particular brand, or the like. Facet counts (e.g., the numbers of results corresponding to one or more particular facets) may be an important indicator employed by users to identify relevant facets that may be used to refine search results. By faceting irrelevant results, error may be introduced into one or more facet counts.

Sorting may comprise re-ordering search results accordingly to some attribute such as price, newness, rating, or the like. For example, via a sort command, a user may re-order search results according to price from low to high, high to low, or the like. Actions like sorting by price low-to-high may bring to the top or highlight lower priced results that are highly irrelevant. Thus, the usefulness of such a sort may be degraded when irrelevant results are returned in a search process.

In view of the foregoing, a system 10 in accordance with the present invention may seek to improve a user experience, increase the probability that a user will be converted to a buyer, or the like by cutting off certain likely irrelevant results before responding to a query. For example, a system 10 may seek to dynamically detect a relevancy drop-off on a query-by-query basis and cut off those results falling at and/or below that drop-off.

A system 10 in accordance with the present invention may provide, enable, or support the cutting off of likely irrelevant search results in any suitable manner. In certain embodiments, a system 10 may be embodied as hardware, software, or some combination thereof. For example, in selected embodiments, a system 10 may include one or more nodes 12.

A node 12 may include one or more processors 14 or central processing units (CPUs) 14. A node 12 may also include memory 16. Such memory 16 may be operably connected to a processor 14 and include one or more devices such as a hard drive 18 or other non-volatile storage device 18, read-only memory (ROM) 20, random access memory (RAM) 22, or the like or a combination or sub-combination thereof. In selected embodiments, such components 14, 16, 18, 20, 22 may exist in a single node 12. Alternatively, such components 14, 16, 18, 20, 22 may be distributed across multiple nodes 12.

In selected embodiments, a node 12 may include one or more input devices 24 such as a keyboard, mouse, touch screen, scanner, memory device, communication line, and the like. A node 12 may also include one or more output devices 26 such as a monitor, output screen, printer, memory device, and the like. A node 12 may further include a network card 28, port 30, or the like to facilitate communication through a computer network 32. Internally, one or more busses 34 may operably interconnect various components 14, 16, 24, 26, 28, 30 of a node 12 to provide communication therebetween. In certain embodiments, various nodes 12 of a system 10 may contain more or less of the components 14, 16, 24, 26, 28, 30, 34 described hereinabove.

Different nodes 12 within a system 10 may perform difference functions. For example, one or more nodes 12 within a system 10 may function as or be clients 36. Additionally, one or more nodes 12 within a system 10 may function as or be servers 38. Accordingly, a system 10 may include one or more servers 38 or the like serving files, data, applications, etc. to one or more clients 36 connected thereto. A system 10 may also include one or more nodes 12 that function as or are routers 40 and the like. Accordingly, one computer network 32 may be connected to other computer networks 42 via one or more routers 40.

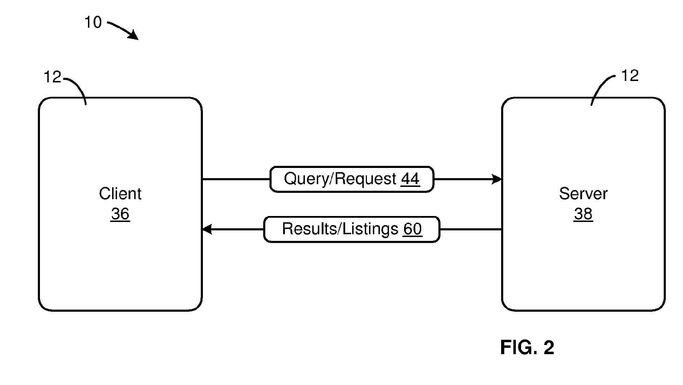

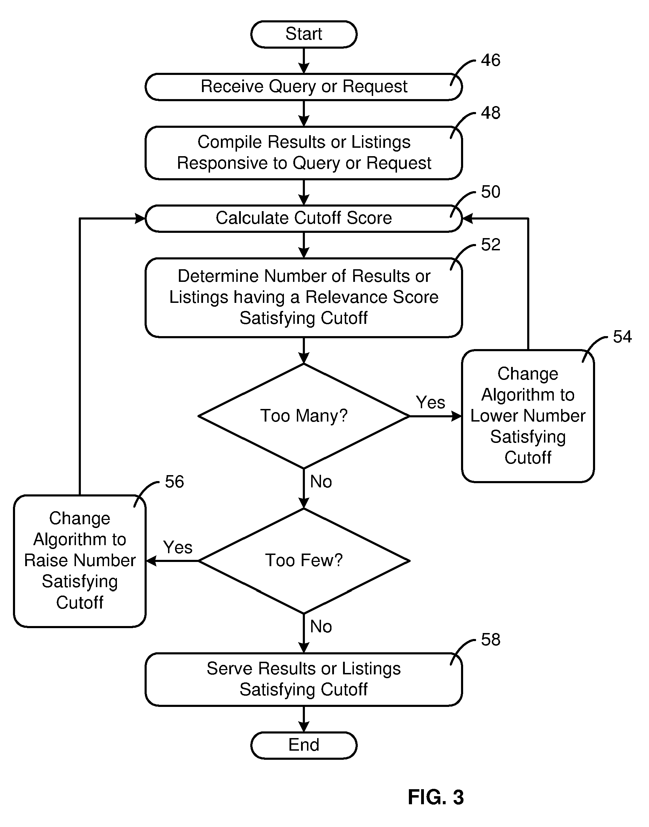

Referring to Figures 2 and 3, in selected embodiments, a system 10 may provide, enable, or support the cutting off of certain likely irrelevant results in the context of an exchange between nodes 12. For example, a cutoff may be made in connection with one or more exchanges between a client 36 and server 38. Accordingly, in selected embodiments, a relevancy-based cutoff of search results that are likely to be irrelevant may be applied to a plurality of listings passed between a client 36 and server 38.

For example, a client 36 may pass a query 44 or request 44 to a server 38. In general, such a query 44 or request 44 may be directed to certain content stored on, or accessed through, the server 38. Such content may have any suitable subject, combination of subjects, structure, or the like. For example, the content may comprise web pages, web postings, product listings (e.g., goods or services offered for sale), or the like or a combination or sub-combination thereof.

A server 38 may receive 46 the query 44 or request 44 and respond in any suitable manner. In selected embodiments, a server 38 may respond by compiling 48 one or more results or listings that are potentially responsive to the query 44 (e.g., match the query 44). For example, a query 44 may comprise something like "flat screen television." Accordingly, a server 38 may respond by compiling 48 a plurality of listings that are potentially responsive to such a query 44.

In selected embodiments, the results or listings initially compiled 48 may each correspond to a relevance score. Typically, the result or listing with the highest relevance score may be ranked first, the result or listing with the second highest relevance score may be ranked second, and so forth. Accordingly, a server 38 in accordance with the present invention may calculate 50 a cutoff score. A cutoff score may be a relevance score used in determining which results or listings are to be served and which are to be cutoff as irrelevant.

Once a cutoff score has been calculated 50, a test may determine whether the cutoff is useful or appropriate. For example, in selected embodiments, a number of results or listings having relevance scores satisfying the cutoff may be determined 52. If a number of results of listings satisfying a cutoff is too high, an algorithm used to calculate the cutoff may be changed 54 to lower the number of results of listings satisfying the cutoff. Conversely, if a number of results of listings satisfying a cutoff is too low, an algorithm used to calculate the cutoff may be changed 56 to raise the number of results of listings satisfying the cutoff. Once an appropriate cutoff score has been calculated 50, a server 38 may serve 58 the results 60 or listings 60 that satisfy the cutoff to the corresponding client 36.

The exact numbers of what may constitute too many or too few results or listings may vary between different embodiments and applications. What may be appropriate for one situation or application may not be appropriate in another situation or application. Accordingly, such values may be selected on a case-by-case basis. In selected embodiments, about 1000 or more results or listing may be considered to be too many and about 16 to 32 or less results or listings may be considered to be too few.

The flowchart in Figure 3 illustrates the architecture, functionality, and operation of possible implementations of systems, methods, and computer program products according to certain embodiments of the present invention. In this regard, each block in the flowchart may represent a module, segment, or portion of code, which comprises one or more executable instructions for implementing the specified logical function(s). It will also be noted that each block of the flowchart illustration, and combinations of blocks in the flowchart illustration, may be implemented by special purpose hardware-based systems that perform the specified functions or acts, or combinations of special purpose hardware and computer instructions.

It should also be noted that, in some alternative implementations, the functions noted in the blocks may occur out of the order noted in the Figure. In certain embodiments, two blocks shown in succession may, in fact, be executed substantially concurrently, or the blocks may sometimes be executed in the reverse order, depending upon the functionality involved. Alternatively, certain steps or functions (e.g., testing to determine whether a particular cutoff score is appropriate, changing an algorithm to adjust a cutoff score, or the like) may be omitted if not needed.

Embodiments in accordance with the present invention may be embodied as an apparatus, method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. In selected embodiments, a computer-readable medium may comprise any non-transitory medium that can contain, store, communicate, propagate, or transport the program for use by or in connection with the instruction execution system, apparatus, or device.

Computer program code for carrying out operations of the present invention may be written in any combination of one or more programming languages, including an object-oriented programming language such as Java, Smalltalk, C++, or the like and conventional procedural programming languages, such as the "C" programming language or similar programming languages. The program code may execute entirely on one or more clients 36, servers 38, or combinations or sub-combinations thereof. In selected embodiments, one or more clients 36 and servers 38 may be positioned remotely with respect to one another. Accordingly, such nodes 12 may be connected to one another through any type of network, including a local area network (LAN) or a wide area network (WAN), or the connection may be made through the Internet using an Internet Service Provider.

Embodiments can also be implemented in cloud computing environments. In this description and the following claims, "cloud computing" is defined as a model for enabling ubiquitous, convenient, on-demand network access to a shared pool of configurable computing resources (e.g., networks, servers, storage, applications, and services) that can be rapidly provisioned via virtualization and released with minimal management effort or service provider interaction, and then scaled accordingly. A cloud model can be composed of various characteristics (e.g., on-demand self-service, broad network access, resource pooling, rapid elasticity, measured service, etc.), service models (e.g., Software as a Service ("SaaS"), Platform as a Service ("PaaS"), Infrastructure as a Service ("IaaS"), and deployment models (e.g., private cloud, community cloud, public cloud, hybrid cloud, etc.).

Selected embodiments in accordance with the present invention may be described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions or code. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

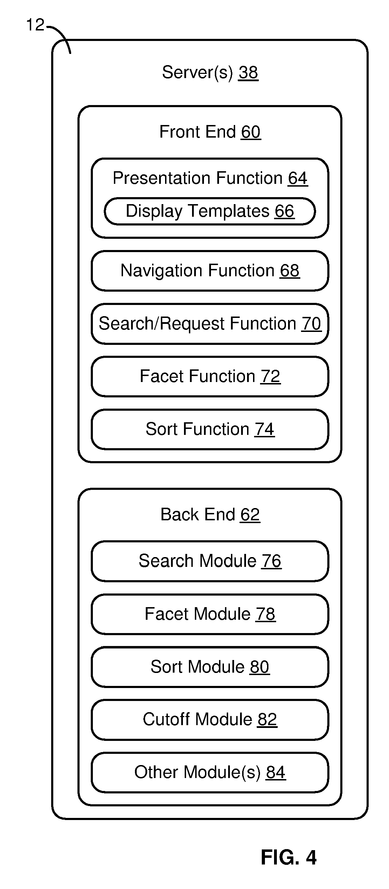

Referring to Figure 4, in selected embodiments, a system 10 in accordance with the present invention may include one or more servers 38 supporting a website, mobile application, or the like or a combination thereof. One or more such servers 38 may comprise or support a "front end" 60 and/or a "back end" 62. A front end 60 may provide or support a user interface viewed or utilized by the human users of one or more clients 36. A back end 62, on the other hand, may perform, provide, or support the behind-the-scene work of processing queries, calculating 50 cutoff scores, sorting listings, or the like or a combination or sub-combination thereof.

In certain embodiments, selected functions that may typically be associated with a front end 60 of a server 38 may be off loaded to one or more clients 36. For example, an application (e.g., a mobile application) installed on a client 36 (e.g., a desktop computer, laptop computer, tablet computer, smart phone, electronic reader, music player, or the like of a human user) may provide a user interface for a system 10 in accordance with the present invention. Accordingly, in selected embodiments, one or more servers 38 may primarily perform functions typically associated with a back end 62.

In selected embodiments, a front end 60 may include a presentation function 64 controlling the content and/or content format to be displayed via one or more clients 36 to the respective human users thereof. In certain embodiments, a presentation function 64 may include one or more display templates 66 defining the visual look supported by the front end 60 (e.g., the look of the various pages of a website or views or screens of an application). A front end 60 may also include a navigation function 68. A navigation function 68 may receive commands from a user via a client 36 and direct a presentation function 64 to display other templates, files, pages, screens, views, and the like.

A front end 60 may include a search or request function 70. A search or request function 70 may provide a mechanism through which one or more queries 44 or requests 44 may be passed to and/or received 46 by a server 38. Similarly, a front end 60 may include a facet function 72, sort function 74, or the like or a combination thereof. A facet function 72 may provide a mechanism through which one or more facet requests may be passed to and/or received by a server 38. A sort function 74 may provide a mechanism through which one or more sort requests may be passed to and/or received by a server 38.

In selected embodiments, a back end 62 may include a search module 76, facet module 78, sort module 80, cutoff module 82, one or more other modules 84 as desired or necessary, or the like or a combination or sub-combination thereof. A search module 76 may identify, collect, or compile a plurality of listings or results that match one or more corresponding queries 44 or requests 44. A facet module 78 may refine or filter a plurality of listings or results according to brand, price, or some other attribute thereof. A sort module 80 may rank, sort, or re-order a plurality of listings or results according to some attribute thereof. A cutoff module 82 may calculate 50 a cutoff score, test a cutoff score to ensure that is it appropriate for a particular compilation of results or listings, change an algorithm (e.g., change a weighting within an algorithm) to alter a cutoff score up or down as needed or desired, determine whether selected results or listings satisfy a cutoff score, or the like or a combination or sub-combination thereof.

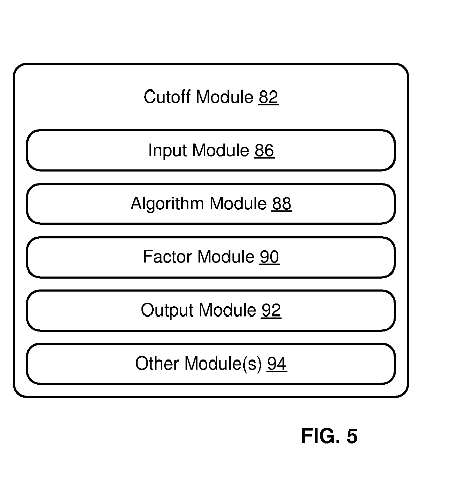

Referring to Figure 5, a system 10 in accordance with the present invention may cut off matching listings or results that are likely to be irrelevant in any suitable manner. In selected embodiments, a cutoff module 82 may provide, enable, or support such functionality. A cutoff module 82 may include any suitable arrangement of sub-components or modules. In certain embodiments, a cutoff module 82 may include an input module 86, algorithm module 88, factor module 90, output module 92, one or more other modules 94 as desired or necessary, or the like or some combination or sub-combination thereof.

An input module 86 may generate, collect, extract, receive, communicate, and/or process any inputs (e.g., instructions, information, etc.) needed or used by a cutoff module 82. For example, an input module 86 may receive a command or instruction to conduct a cutoff process. Accordingly, in selected embodiments, an input module 86 may be responsible for initiating a relevance-based cutoff process. Alternatively, or in addition thereto, an input module 86 may collect, receive, extract, or communicate information (e.g., one or more relevance scores) that may be used or processed by one or more other components or modules of a cutoff module 82.

An algorithm module 88 may store, generate, select, populate, and/or apply one or more algorithms for calculating cutoff scores. In selected embodiments, an algorithm module 88 may store, generate, select, populate, and/or apply algorithms that operate on different basis for calculating cutoff scores. For example, an algorithm module 88 may store and/or apply a first algorithm that employs a percentage-based approach for calculating a cutoff score and a second algorithm that employs a slope-based approach.

A factor module 90 may record, identify, select, and/or communicate one or more factors. Factors may be viewed as numeric weights. In selected embodiments, one or more algorithms in accordance with the present invention may include one or more factors. Proper selection of the particular values of those one or more factors may enable an algorithm to be tuned for a particular embodiment or situation. Accordingly, a factor module 90 may receive information characterizing a particular situation, plurality of listings, or the like and select one or more factors that may be appropriate therefor.

An output module 92 may generate, collect, compile, send, communicate, and/or process any outputs (e.g., instructions, information, etc.) of a cutoff module 82. For example, in selected embodiments, an output module 92 may receive a cutoff score (e.g., from an algorithm module 88), identify which results or listings satisfy the cutoff score, and output the results or listings satisfying the cutoff score to be served 58 to an appropriate client 36.

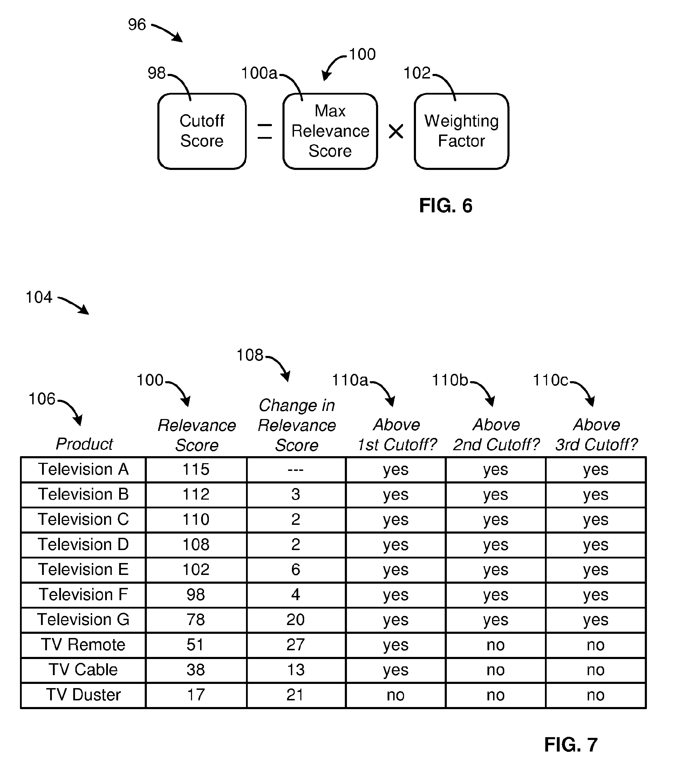

Referring to Figure 6, an algorithm 96 in accordance with the present invention may generate, calculate, and/or output cutoff scores 98 weighted or influenced by relevance scores 100. In selected embodiments, a relevance score 100 may be a numeric value that characterizes an expected relevance of a corresponding result or listing to a particular query 44 or request 44. A relevance score 100 may be collected or generated by a search module 76 for each result or listing compiled 48 in a search process. That is, within a plurality of results or listings, each such result or listing may be linked to a corresponding relevance score 100.

An algorithm 96 may generate, calculate, and/or output a cutoff score 98 in any suitable manner. In selected embodiments, an algorithm 96 may apply a percentage-based approach using a maximum relevance score 100a (e.g., a relevance score 100 corresponding the result or listing deemed in a search process to be the most relevant to a particular query 44). For example, an algorithm 96 may generate a cutoff score 98 by multiplying a maximum relevance score 100a by a weighting factor 102.

A weighting factor 102 may be selected and applied to control how far a cutoff score 98 will be from a maximum relevance score 100a. In an environment where a higher relevance score 100 is indicative of greater predicted relevance, a weighting factor 102 may have a value that is between zero and one with a range from about 0.05 to about 0.5 likely being the most useful. For example, by setting a weighting factor 102 at 0.5, a cutoff score 98 may be set at 50% of the maximum relevance score 100a. In an environment where a lower relevance score 100 is indicative of greater predicted relevance, a weighting factor 102 may have a value that is greater than one.

The exact value of a weighting factor 102 may vary between different embodiments and applications. What may be appropriate for one situation or application may not be appropriate in another situation or application. Accordingly, the value of a weighting factor 102 may be selected on a query-by-query basis.

In selected embodiments where a higher relevance score 100 is indicative of greater predicted relevance, a value of about 0.15 has been found to be a useful weighting factor 102. Accordingly, in certain embodiments, a weighting factor 102 may have a default value of about 0.15. However, if too many or too few results or listings satisfy the resulting cutoff score 98, any such default value may be increased or decreased as necessary to provide an appropriate cutoff score 98 for the particular query 44 or request 44 and the corresponding results or listings.

In certain embodiments, an algorithm 96 may apply a slope-based approach. For example, in an environment where a higher relevance score 100 is indicative of greater predicted relevance, an algorithm 96 may identify a maximum change between the relevance scores 100 of adjacent results or items ranked according to relevance score. The maximum change may be indicative of a significant decrease in predicted relevance. Accordingly, a cutoff score 98 may be selected to exclude those results or listings falling on the lower side of such a decrease. That is, a cutoff score 98 may be greater than or equal to a lower relevance score 100 corresponding to the maximum difference and/or less than or equal to a higher relevance score 100 corresponding to the maximum difference. For example, a cutoff score 98 may be calculated as the average of the two relevance scores 100 have the greatest change therebetween.

If a slope-based approach produces too many or too few results or listings satisfying a resulting cutoff score 98, any suitable approach or algorithm 96 may be used to adjust the cutoff score 98. In certain such situations, an algorithm 96 may be used to identify the second biggest change in relevance score 100 that is appropriately above or below the first biggest change. For example, if, in an environment where a higher relevance score 100 is indicative of greater predicted relevance, too many results or listings satisfy a first cutoff score 98, an algorithm 96 may identify the biggest change in relevance score 100 that is above the first cutoff score 98. A second cutoff score 98 may then be selected to exclude those results or listings falling on the lower side of this secondary change. Such a process may be repeated or iterated until an appropriate number of results or listing satisfying a cutoff score 98 is achieved

Referring to Figure 7, in selected embodiments, the effects of one or more algorithms 99 in accordance with the present invention, and one or more weighting factors 102 thereof, may be seen through example. Accordingly, in the illustrated table 104, a plurality of results 106 or listings 106 are shown in conjunction with corresponding relevance scores 100. The results 106 or listings 106 might be those compiled 48 in response to a query 44 or request 44 for "televisions," "flat screen televisions," or the like. As shown, the listings 106 are ordered high-to-low according to relevance score 100 (e.g., as they may be compiled 48 in response to an initial query 44 or request 44). Additionally, where appropriate, a change 108 in relevance score 100 from an adjacent, higher ranked result 106 or listing 106 is provided.

In the context of the foregoing, three columns 110 indicate whether the corresponding results 106 or listings 106 satisfy a particular cutoff 98. The first two columns 110a, 110b correspond to the algorithm of Figure 6 with different weighting factors 102 applied. In the first column 110a, the weighting factor 102 has been set to 0.15. In the second column 110b, the weighting factor 102 has been set to 0.45.

As can be noted by comparing the first and second columns 110a, 110b, a change in the weighting factor 102 changes which results 106 or listing 106 satisfy the corresponding cutoff score 98. In the first column 110a, with a maximum relevance score 100a of 115 and a weighting factor 102 of 0.15, the cutoff 98 is 17.25. Accordingly, only the result 106 with the lowest relevance score 100 fails to satisfy the cutoff 98. In the second column 110b, with a maximum relevance score 100a of 115 and a weighting factor 102 of 0.45, the cutoff 98 is 51.75. Accordingly, the three results 106 with the lowest relevance scores 100 fail to satisfy the cutoff 98.

The third column 110c corresponds to a slope-based approach. As may be noted, the maximum change (e.g., a change of 27) occurs between the relevance scores 100 of "Television G" and "TV Remote." This maximum change may be indicative of a significant decrease in predicted relevance. Accordingly, a cutoff score 98 may be selected to exclude those results or listings falling on the lower side of such a decrease. For example, a cutoff score 98 may be selected such that the "TV Remote" and the two results 106 therebelow do not satisfy the cutoff score 98 and, consequently, will not be served 58 to a client 36 in response to a corresponding query 44 or request 44.

The present invention may be embodied in other specific forms without departing from its spirit or essential characteristics. The described embodiments are to be considered in all respects only as illustrative, and not restrictive. The scope of the invention is, therefore, indicated by the appended claims, rather than by the foregoing description. All changes which come within the meaning and range of equivalency of the claims are to be embraced within their scope.

## Claims

1. A computer-implemented method for cutting off search results, the method comprising:
obtaining, by a computer system, a plurality of listings and a plurality of relevance scores;
obtaining, by the computer system, information linking each listing of the plurality of listings to a corresponding relevance score of the plurality of relevance scores;
calculating, by the computer system, a first cutoff score that is less than a maximum relevance score of the plurality of relevance scores and greater than a minimum relevance score of the plurality of relevance scores; and
serving, by the computer system to a client computer, a first subset of the plurality of listings, the first subset comprising those listings of the plurality of listings linked to a corresponding relevance score greater than the first cutoff score.

2. The method of claim 1, wherein the calculating the first cutoff score comprises multiplying the maximum relevance score of the plurality of relevance scores by a first weighting, the first weighting being greater than zero and less than one.

3. The method of claim 2, wherein the first weighting is between about 0.05 and about 0.5.

4. The method of claim 3, further comprising determining, by the computer system before the serving, that a number of listings contained within the first subset is too high.

5. The method of claim 4, further comprising calculating, by the computer system after the determining, a second cutoff score by multiplying the maximum relevance score of the plurality of relevance scores by a second weighting, the second weighting being greater than the first weighting.

6. The method of claim 3, further comprising determining, by the computer system before the serving, that a number of listings contained within the first subset is too low.

7. The method of claim 6, further comprising calculating, by the computer system after the determining, a second cutoff score by multiplying the maximum relevance score of the plurality of relevance scores by a second weighting, the second weighting being less than the first weighting.

8. The method of claim 1, wherein the calculating comprises ranking the plurality of listings in an order according to relevance score.

9. The method of claim 8, wherein the calculating further comprises determining a maximum difference in relevance score between adjacent listings contained with the order.

10. The method of claim 9, wherein the first cutoff score is greater than or equal to a lower relevance score corresponding to the maximum difference.

11. The method of claim 10, wherein the first cutoff score is less than or equal to a higher relevance score corresponding to the maximum difference.

12. The method of claim 1, further comprising receiving, by the computer system from the client computer, a search query.

13. The method of claim 12, wherein the plurality of listings comprise search results corresponding to the search query.

14. A computer-implemented method for cutting off search results, the method comprising:
receiving, by a computer system from a client computer, a query;
obtaining, by the computer system as a response to the query, a plurality of listings ranked according to a plurality of relevance scores, each listing of the plurality of listings corresponding to a relevance score of the plurality of relevance scores;
calculating, by the computer system, a first cutoff score by multiplying a maximum relevance score of the plurality of relevance scores by a first weighting, the first weighting being greater than zero and less than one; and
serving, by the computer system to the client computer, a first subset of the plurality of listings, the first subset comprising those listings of the plurality of listings linked to a corresponding relevance score greater than the first cutoff score.

15. A computer system comprising:
one or more processors;
one or more memory devices operably connected to the one or more processors; and
the one or more memory devices collectively storing
a search module programmed to receive a query and compile, as a response to the query, a plurality of listings ranked according to a plurality of relevance scores, each listing of the plurality of listings corresponding to a relevance score of the plurality of relevance scores,
a cutoff module programmed to calculate a cutoff score by multiplying a maximum relevance score of the plurality of relevance scores by a first weighting, the first weighting being greater than zero and less than one, and
the search or cutoff module further programmed to return, as a response to the request, a subset of the plurality of listings, the subset comprising those listings of the plurality of listings linked to a corresponding relevance score greater than the first cutoff score.
